# EUROPEAN PATENT SPECIFICATION

(11) **EP 1 420 965 B1**
(45) Date of publication and mention of the grant of the patent: **08.07.2009**
(21) Application number: 02760861.1
(22) Date of filing: 28.08.2002
(51) Int. Cl.: B60C 9/18

(54) **STEEL CORD STRUCTURE IN HEAVY DUTY TIRES**
STAHLKORDKONSTRUKTION IN SCHWERLASTREIFEN
STRUCTURE DE CÂBLES D'ACIER DANS DES PNEUS POIDS-LOURDS

(30) Priority: 28.08.2001 KR 2001052175
(43) Date of publication of application: 26.05.2004
(73) Proprietor: Kumho Tire Co., Inc., Seoul 110-061 (KR)
(72) Inventor: SHON, Bong-Young, Kwangju-shi 502-770 (KR); LIM, Dong-Min, Kwangju-shi 506-302 (KR)
(74) Representative: Neyret, Daniel Jean Marie
(86) International application number: PCT/KR2002/001622
(87) International publication number: WO 2003/017875

(56) References cited:
- JP-A- 05 311 586
- JP-A- 10 025 676
- JP-A- 10 280 289
- JP-A- 11 028 906

## Description

### Technical Field

The present invention is related to a steel cord structure in heavy duty tires and, more particularly, to a steel cord structure in heavy duty tires having the structure of 3*d₁+8*d₂(HT), which is modified from 3+8*d(HT) structure, with different twist directions and different twist pitch lengths or twist periods of core and strand filaments.

### Background Art

Generally, steel cord for reinforcing a tire is produced as follows: First, steel wires are classified according to their strength and the surface of the wire is cleaned. Then, the wires are treated while elongating one to three times to obtain required thickness, and after plated with brass which is an alloy of two metals of copper and zinc, the wires are elongation treated finally to prepare steel filaments. A steel cord is produced by twisting the filaments with required structure. The steel wire used is normal tensile steel with carbon content of 0.73%, high tensile steel with carbon content of 0.825, and super high tensile steel with carbon content of 0.92. Normal tensile steel and high tensile steel are generally used for the carcass of normal tire, and high tensile steel and super high tensile steel are used for belts.

For use in the tire belt of heavy duty tire, normal tensile steel is generally used, and the steel core structure of 3+9+15*d+w (d: diameter of the filament, w: spiral wrap) has been employed for fatigue characteristics and dispersion of stress due to repeated impact. However, high tensile steel and steel cord with simple structure is used in order to increase strength and reduce weight.

The typical shape of steel cord with simple structure is 3+8*d, which has the same twist direction of core (inner cord of the steel cord, corresponding to 3 in this structure) and strand (outer cord of steel cord, corresponding to 8 in this structure), and the same twist pitch length. This structure is disclosed in Japanese Utility Model Publication Hei 5-19394 and Japanese Patent Publication Sho 63-275788. Further, the structure with different twist pitch length of the core and strand is disclosed in Japanese Patent Publication Hei 10-53980 and Hei 7-109685. In addition, the structure with different preforming ratio, the twisted extent of the core and strand, is disclosed in Japanese Patent Publication Hei 8-1994487, Hei 8-158274, Hei 10-131065 and Hei 8-176978 respectively.

In the above disclosed arts, the shape, twisted extent of the steel cord, twist pitch length of the core and strand are modified in order to enhance the adhesion of the tire and steel cord by increasing the penetration of rubber into the steel cord. It is known that the durability of the tire employing these structure is enhanced compared to conventional tires.

However, the above mentioned methods depend mainly on the amount of difference in twist pitch length between core and strand, and preforming ratio, the twisted extent, so having limit in enhancing the adhesion force. Especially when the preforming ratio becomes excessive to enhance adhesiveness, the preforming ratio is varied by tensile force applied to cord during rolling process of the rubber, lowering efficiency and reducing manufacturing capacity.

### Summary of the Invention

Therefore, the object of the present invention is to solve the problem of the prior arts and to provide a steel cord structure which can enhance the adhesiveness of the rubber and steel cord.

In order to accomplish this object, the inventors of the present invention have carried out a lot of research repeatedly, and finally invented a steel cord structure for use in heavy duty tires, taking notice of the fact that the penetration of the rubber is enhanced and adhesiveness of the rubber and steel cord is increased when the twist direction of the core and strand filaments are different in the adhesion structure of the rubber and steel cord.

The steel cord of the present invention is defined by the combination of features of claim 1.

The present invention will now be described in more detail.

The steel cord structure of the present invention can be applied to various kinds of steel cords which comprises core and strand filaments. The effect can be increased when the diameter of the core filament is the same or larger than that of strand filament since this structure can solve the problem that can be caused by the difference in the twist direction and can increase the penetration of the rubber. It is because the penetration of rubber into the cord affects the adhesiveness of the rubber and cord, and also affects fatigue characteristics and corrosion by the defacement between filaments.

Moreover, by making different the twist pitch length and twist direction of the core and strand filaments, space is formed between the core and strand filaments enhancing the penetration of a rubber and increasing the adhesiveness of the rubber. The diameter of filament is preferably 0.15∼0.40mm.

In the present invention, the steel cord of 3+8*d(HT) which has been developed recently is employed and modified to 3*d₁+8*d₂(HT) (where d₁ and d₁ are diameters of the core and strand filaments with d₂≥d₁).

In the present invention, the number of the filaments is the same as that of 3+8*d(HT) steel cord, but the twist direction of the core and strand filaments are different, the twist direction of the core filament being in the S direction (left handed screw direction) and the twist direction of the strand filament in the Z direction (right handed screw direction). Also the twist pitch lengths of the core and strand filaments are made to be different with CP/SP=0.5∼0.94(where, CP is the core pitch length and SP is the strand pitch length). In this way, the penetration of rubber into the steel cord is increased improving the durability. The steel wire use has carbon content of 0.82∼0.92weight %, and the twist pitch length of the core filament is 6∼12mm and the twist pitch length the strand filament is 12∼18mm. Further, the preforming ratio which represents the extent of twist and affects the rubber rolling process in the production of tires is preferably maintained in the range of 100∼150% to facilitate the manufacturing process and to maintain stable shape after manufacturing. Here, the preforming ratio is the ratio of the theoretical diameter of completely twisted filament(Do) to the measured diameter of the actually twisted filament(D₁).

### Detailed Description of the preferred Embodiments

The present invention will be explained with reference to the preferred embodiment..

### Example 1

Adhesiveness test according to ASTM D2229:T-Test is carried out on three samples and the results are shown in Table 1. In sample 1, rubber is applied to the steel cord of the present invention. In sample 2, rubber is applied to the steel cord of 3+8*0.35(HT) which is used recently, and in sample 3, rubber is applied to the steel cord of 3+9+15*0.22+W which has been used conventionally.

For comparison with other samples, the sample 1, to which the present invention is applied, used a steel cord of 3+d₁+8*d₂(HT) with the same diameter of core filament (d₁) and strand filament(d₂) of 0.35mm and with different twist pitch length of CP/SP = 0.67. The twist direction of the core filament is in the left handed direction and the twist direction of the strand filament is in the right handed direction, which results in different twist direction.

The strand and core filaments of the sample 2 have same twist direction, and same diameter of 0.35mm and same twist pitch length of 18mm.

**Table 1**

| Test item | Sample 1 | Sample 2 | Sample 3 |
|---|---|---|---|
| | 3*d₁+8*d₂HT | 3+8*0.35HT | 3+9+15*0.22+W |
| Initial adhesiveness Force: kgf/coverage(%) | 185/95 | 179/95 | 176/70 |
| After 15days of thermal degradation kgf/%95°C air oven | 182/95 | 172/95 | 163/65 |
| Rubber penetration(%) | 90 | 80 | 10 |

As shown in the table, sample 1 to which the present invention was applied has excellent initial adhesiveness, thermal degradation property, and rubber penetration compared to samples 2 and 3.

Especially, comparison with sample 2 which has the same number of core and strand filaments shows that the twist direction and twist pitch length greatly affect the initial adhesiveness, thermal degradation property and rubber penetration, and that the present invention extends the durable life of the heavy duty tire.

### Example 2

Conventional test for durability was carried out for a tire using the steel cord (sample1) to which the present invention and a tire which uses conventional steel cord (sample 3), and the results are shown in Table 2.

The spec of the tire used in the test is 385/65R 22.5.

**Table 2**

| Item | Tire using sample 1 | Tire using sample 3 |
|---|---|---|
| | (3*d₁+8*d₂ HT) | (3+9+15*0.22+W) |
| Durability for speed (hour: min) | 64:41 | 61:06 |
| Durability for load (hour: min) | 72:30 | 65:33 |

As can be seen from the results, the tire to which the steel cord of the present invention is applied has more durability for speed and load compared to the conventional tire. In sum, the durability of the tire employing the steel cord of present invention is improved.

### Industrial Applicability

By using the steel cord of the present invention, the rubber penetrates easily into the steel cord enhancing the adhesiveness between rubber and steel cord. Therefore the movement of the tire is minimized while the vehicle travels. Also, since water and air do not directly contact the surface of the steel cord, the corrosion of the tire is reduced enhancing the durability of the tire.

## Claims

1. A steel cord structure in heavy duty tires, wherein the steel cord comprises core and strand filaments, the core and strand filaments having different twist directions and different twist pitch lengths, wherein the steel cord has the structure of 3*d₁+8*d₂ (HT), where d₁ and d₂ are diameters of the core and strand filaments respectively, wherein the performing ratio, the extent of twisting of the filaments, is 100∼150%, wherein the diameters of the core filament d₁ and strand filament d₂ are 0.15∼0.40mm with d₂≥d₁, and wherein the twist pitch length of the core filament is 6∼12mm and the twist pitch length of the strand filament is 12∼18mm.

2. The steel cord structure in heavy duty tires of Claim 1, wherein the filament of the steel cord has carbon content of 0.82∼0.92 weight %.

3. The steel cord structure in heavy duty tires of Claim 1, wherein the twist direction of the core filament is in the S direction or left handed direction and the twist direction of the strand filament is in the Z direction or right handed direction.

4. The steel cord structure in heavy duty tires of Claim 1, wherein the ratio of the twist pitch length of the core filament, CP, to the twist pitch length of the strand filament, SP, is CP/SP=0.50∼0.94.

## Patentansprüche

1. Stahlkordstruktur in Schwerlastreifen, wobei der Stahlkord Kern- und Strangfilamente umfasst, wobei die die Kern- und Strangfilamente unterschiedliche Verdrehungsrichtungen und unterschiedliche Verdrehungssteigungslängen besitzen, wobei der Stahlkord die Struktur 3*d₁+8*d₂ (HT) besitzt, wobei d₁ und d₂ Durchmesser der Kern- bzw. Strangfilamente sind, wobei das Performing-Verhältnis, das Ausmaß der Verdrehung der Filamente, 100-150% beträgt, die Durchmesser des Kernfilaments d₁ und des Strangfilaments d₂ 0,15-0,40 mm betragen, mit d₂ ≥ d₁ und wobei die Verdrehungssteigungslänge des Kernfilaments 6-12 mm und die Verdrehungssteigungslänge des Strangfilaments 12-18 mm betragen.

2. Stahlkordstruktur in Schwerlastreifen nach Anspruch 1, wobei das Filament des Stahlkords einen Kohlenstoffgehalt von 0,82-0,92 Gew.% besitzt.

3. Stahlkordstruktur in Schwerlastreifen nach Anspruch 1, wobei die Verdrehungrichtung des Kernfilaments in der S-Richtung oder Linksrichtung und die Verdrehungsrichtung des Strangfilaments in der Z-Richtung oder Rechtsrichtung vorliegen.

4. Stahlkordstruktur in Schwerlastreifen nach Anspruch 1, wobei das Verhältnis der Verdrehungssteigungslänge des Kernfilaments, CP, zu der Verdrehungssteigungslänge des Strangfilaments, SP, CP/SP = 0,50-0,94 beträgt.

## Revendications

1. Structure de câble d'acier dans des pneus poids lourds, dans laquelle le câble d'acier comprend des filaments d'âme et de toron, les filaments d'âme et de toron ayant des directions de torsion différentes et des longueurs de pas de torsion différentes, dans laquelle le câble d'acier a la structure 3*d₁+8*d₂ (HT), où d₁ et d₂ sont les diamètres des filaments d'âme et de toron respectivement, dans laquelle le rapport de préformage, l'étendue de torsion des filaments, est de 100-150 %, dans laquelle les diamètres du filament d'âme d₁ et du filament de toron d₂ sont de 0,15-0,40 mm avec d₂ ≥ d₁, et dans laquelle la longueur de pas de torsion du filament d'âme est de 6-12 mm et la longueur du pas de torsion du filament de toron est de 12-18 mm.

2. Structure de câble d'acier dans des pneus poids lourds selon la revendication 1, dans laquelle le filament du câble d'acier a une teneur en carbone de 0,82-0,92 % en poids.

3. Structure de câble d'acier dans des pneus poids lourds selon la revendication 1, dans laquelle la direction de torsion du filament d'âme est la direction S ou gauche et la direction de torsion du filament de toron est la direction Z ou droite.

4. Structure de câble d'acier dans des pneus poids lourds selon la revendication 1, dans laquelle le rapport de la longueur de pas de torsion du filament d'âme, CP, sur la longueur de pas de torsion du filament de toron, SP, est CP/SP = 0,50-0,94.
